# EUROPEAN PATENT APPLICATION

(11) **EP 4 712 181 A1**
(43) Date of publication of application: **18.03.2026**
(21) Application number: 25179755.1
(22) Date of filing: 29.05.2025
(51) Int. Cl.: H01M 10/04, H01M 50/109, H01M 50/119, H01M 50/131, H01M 50/153, H01M 50/148, H01M 50/169, H01M 50/181, H01M 50/474, H01M 50/477

(54) **SECONDARY BATTERY**

(30) Priority: 13.09.2024 KR 20240125963
(71) Applicant: SAMSUNG SDI CO., LTD., Yongin-si, Gyeonggi-do 17084 (KR)
(72) Inventor: LEE, Heonwoong, Yongin-si, Gyeonggi-do 17084 (KR)
(74) Representative: Marks & Clerk LLP

(57) **Abstract**

A secondary battery, including an electrode assembly including a first electrode, a second electrode, and a separator therebetween, a case including a bottom portion, a side wall portion connected to the bottom portion, and an opening portion facing the bottom portion, the case accommodating the electrode assembly, and a cap assembly coupled to one end of the side wall portion of the case to seal the opening portion, wherein the case includes a groove region formed on an inner peripheral surface of the side wall portion.

## Description

### BACKGROUND

### 1. Field

The present disclosure relates to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments include a secondary battery, including an electrode assembly including a first electrode, a second electrode, and a separator therebetween, a case including a bottom portion, a side wall portion connected to the bottom portion, and an opening portion facing the bottom portion, the case accommodating the electrode assembly, and a cap assembly coupled to one end of the side wall portion of the case to seal the opening portion, wherein the case includes a groove region formed on an inner peripheral surface of the side wall portion.

The first electrode may be a positive electrode, and the second electrode may be a negative electrode.

A length of the second electrode may be greater than a length of the first electrode in relation to a winding axis direction of the electrode assembly.

The secondary battery may include a coin cell or a button cell.

A material of the case may include stainless steel.

The electrode assembly may further include a first electrode tab connected to the first electrode, and a second electrode tab connected to the second electrode.

The first electrode tab may be connected to the cap assembly.

The second electrode tab may be connected to the bottom portion of the case.

The inner peripheral surface may include a first inner peripheral surface positioned adjacent to the opening portion, and a second inner peripheral surface positioned adjacent to the bottom portion, and the groove region may include a first surface connected to the first inner peripheral surface, a third surface connected to the second inner peripheral surface, and a second surface connected to the first surface and the third surface.

The third surface may be perpendicular to the second inner peripheral surface.

The first surface may include an inclined surface, and the third surface may include an inclined surface.

The first surface may include a curved surface, and the third surface may include a curved surface.

A first boundary line between the first inner peripheral surface and the first surface may correspond to an upper end of the second electrode, and a second boundary line between the second inner peripheral surface and the third surface may correspond to a lower end of the second electrode.

A boundary line between the first inner peripheral surface and the first surface may be separated from an end of the opening portion by a predetermined distance of 0.4 mm to 0.6 mm.

A boundary line between the second inner peripheral surface and the third surface may be separated from the bottom portion by a predetermined distance of 0.1 mm to 0.3 mm.

A distance by which the second surface is separated from a boundary line between the first inner peripheral surface and the first surface may be equal to a distance by which the second surface is separated from a boundary line between the second inner peripheral surface and the third surface.

The second surface may be separated from a boundary line between the first inner peripheral surface and the first surface by a predetermined distance of 0.01 mm to 0.07 mm.

A first boundary line between the first inner peripheral surface and the first surface may be separated from a second boundary line between the second inner peripheral surface and the third surface by a predetermined distance.

The predetermined distance may correspond to a length of the second electrode in relation to a winding axis direction of the electrode assembly.

The predetermined distance may be 2 mm to 4 mm in relation to a winding axis direction of the electrode assembly.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF DRAWINGS

Features will become apparent to those of ordinary skill in the art by describing in detail example embodiments with reference to the attached drawings, in which:
FIG. 1 is a perspective view illustrating an example of a secondary battery according to one or more embodiments of the present disclosure;
FIG. 2 is a diagram illustrating an example of an electrode assembly according to one or more embodiments of the present disclosure;
FIG. 3 is a diagram illustrating an example of a secondary battery according to a comparative example of the present disclosure;
FIG. 4 is a sectional view illustrating an example of a secondary battery with an expanded electrode assembly according to a comparative example of the present disclosure;
FIG. 5 is a diagram illustrating an example of a shape of a groove region according to one or more embodiments of the present disclosure;
FIG. 6 is a sectional view illustrating an example of a case in which the groove region is formed according to one or more embodiments of the present disclosure;
FIG. 7 is a diagram illustrating an example of a secondary battery with a groove region according to one or more embodiments of the present disclosure;
FIG. 8 is a sectional view illustrating an example of a secondary battery with an expanded electrode assembly according to one or more embodiments of the present disclosure;
FIG. 9 is a diagram illustrating an example of a shape of a groove region according to one or more embodiments of the present disclosure;
FIG. 10 is a diagram illustrating an example of a secondary battery with a groove region according to one or more embodiments of the present disclosure;
FIG. 11 is a diagram illustrating an example of a shape of a groove region according to one or more embodiments of the present disclosure; and
FIG. 12 is a diagram illustrating an example of a secondary battery with a groove region according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her embodiments in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, layers and regions illustrated in the drawings may be exaggerated in size and relative size for the clarity of the description. For example, the sizes illustrated in the drawings are merely for the sake of convenience of understanding, and are not limited thereto. Throughout the specification, the same reference sign denotes the same component.

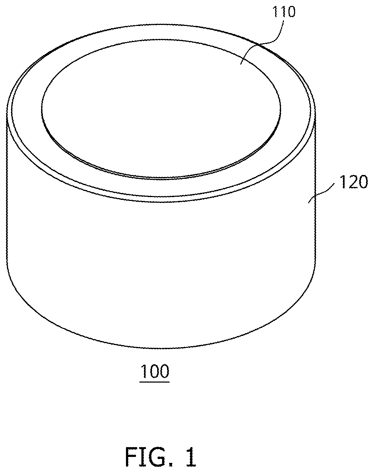

FIG. 1 is a perspective view illustrating an example of a secondary battery according to one or more embodiments of the present disclosure.

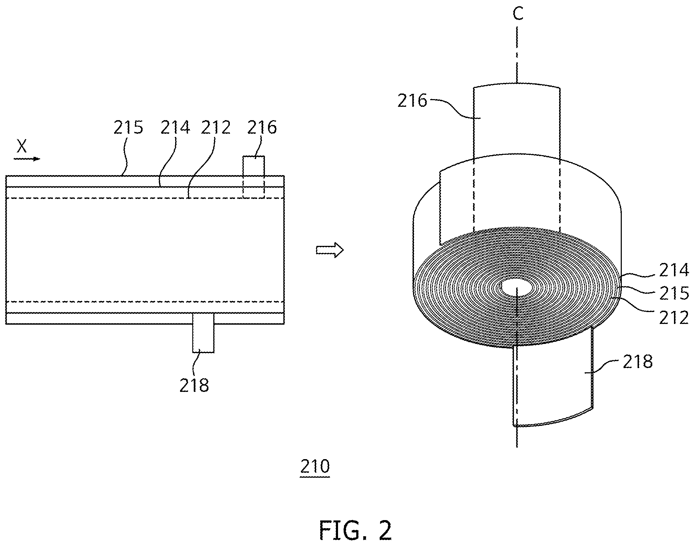

Referring to FIG. 1, a secondary battery 100 may include a case 120, a cap assembly 110, and an electrode assembly 210 (see FIG. 2).

The secondary battery 100 may be a coin or button secondary battery. For example, the secondary battery 100 may have a cylindrical shape. However, the secondary battery 100 may be variously shaped, for example, a square, pouch, or cylindrical battery. In one example, the secondary battery 100 may be a secondary battery that may be charged and discharged.

The case 120 may accommodate the electrode assembly 210 (see FIG. 2) and an electrolyte, and may form an outer shape of the secondary battery together with the cap assembly 110. The case 120 may include a bottom portion, a side wall portion connected to the bottom portion, and an opening portion facing the bottom portion. However, the case 120 may have various shapes such as a circular or pouch shape. The case 120 may be made of metal such as stainless steel (SUS), aluminum (Al), an aluminum alloy, nickel (Ni)-plated steel, or a laminate film or plastic forming a pouch.

The case 120 may accommodate the electrode assembly 210 (see FIG. 2). The electrode assembly 210 (see FIG. 2) may be inserted through an opening formed on one side of the case 120. Afterwards, the opening of the case 120 may be sealed by the cap assembly 110. Through welding, the opening of the case 120 may be sealed by the cap assembly 110. The cap assembly 110 may be coupled with one end of the side wall portion of the case 120 to seal the opening portion.

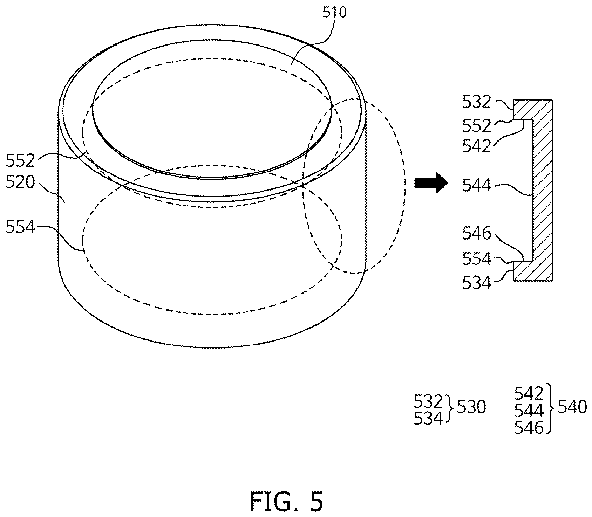

According to one or more embodiments, the case 120 may include a groove region formed on an inner peripheral surface of the side wall portion. The groove region may be formed continuously along the inner peripheral surface of the side wall portion. As another example, the groove region may be formed discontinuously along the inner peripheral surface of the side wall portion. The inner peripheral surface may include a first inner peripheral surface positioned adjacent to the opening portion and a second inner peripheral surface positioned adjacent to the bottom portion. The groove region may include a first surface connected to the first inner peripheral surface, a third surface connected to the second inner peripheral surface, and a second surface connected to the first surface and the third surface. Such a configuration will be described in detail below with reference to FIGS. 5 to 12.

FIG. 2 is a diagram illustrating an example of the electrode assembly according to one or more embodiments of the present disclosure. A left diagram of FIG. 2 is a plan view illustrating a shape of the electrode assembly of the secondary battery before the electrode assembly is wound, and a right diagram of FIG. 2 is a perspective view illustrating a shape of the electrode assembly of the secondary battery after the electrode assembly is wound.

According to one or more embodiments, the electrode assembly 210 may include a first electrode 212, a second electrode 214, and a separator 215. For example, the electrode assembly 210 may be formed by winding the separator 215 interposed between the first electrode 212 and the second electrode 214. The electrode assembly 210 may be wound to form a core, and may include a through-hole in the core. The electrode assembly 210 may further include a first electrode tab 216 connected to the first electrode 212 and a second electrode tab 218 connected to the second electrode 214.

The first electrode 212 may include a first base member, a first uncoated portion formed on the first base member, and the first electrode tab 216 connected to one surface of the first uncoated portion. The first electrode 212 may include a first active material layer to which a first active material is applied. The first electrode tab 216 may extend outward from the first uncoated portion of the first base member on which an active material layer is not applied, and the first electrode tab 216 may be electrically connected to a terminal plate of the cap assembly.

The second electrode 214 may include a second base member, a second uncoated portion formed on the second base member, and the second electrode tab 218 connected to one surface of the second uncoated portion. The second electrode 214 may include a second active material layer to which a second active material is applied. The second electrode tab 218 may extend outward from the second uncoated portion of the second base member on which an active material layer is not applied, and the second electrode tab 218 may be electrically connected to the case.

The electrode assembly may be wound from left to right (X direction in FIG. 2) in relation to a drawing direction of FIG. 2. Hereinafter, the X direction may be referred to as a winding direction, and a left end and a right end of the first electrode 212 and the second electrode 214 in relation to the drawing direction of FIG. 2 may mean a winding leading end and a winding tailing end.

In one or more embodiments, the winding leading end may refer to a region where winding begins during a winding process of the electrode assembly 210, and the winding tailing end may refer to a region where winding ends during the winding process of the electrode assembly 210. Accordingly, the first electrode tab 216 at the winding tailing end may be positioned on an outer periphery of the wound electrode assembly 210. For example, the winding tailing end may be positioned at an outmost edge of the electrode assembly 210.

The first electrode 212 may function as a positive electrode. In one or more embodiments, the first base member may be made of, for example, aluminum foil, and the first active material may include, for example, a transition metal oxide.

A positive electrode plate for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode plate may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Non-limiting examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

The second electrode 214 may function as a negative electrode. In one or more embodiments, the second base member may be made of, for example, copper foil or nickel foil, and the second active material may include, for example, graphite.

The negative electrode plate for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The negative current collector may include a copper foil, a nickel foil, a stainless steel foil, a titanium foil, a nickel foam, a copper foam, a polymer substrate coated with a conductive metal, or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

According to one or more embodiments, a length of the second electrode 214 may be greater than a length of the first electrode 212 in relation to a direction of a winding axis C of the electrode assembly 210. An upper end of the second electrode 214 may be disposed above an upper end of the first electrode 212, and a lower end of the second electrode 214 may be disposed under a lower end of the first electrode 212.

The separator 215 may function to prevent a short circuit between the first electrode and the second electrode while allowing movement of lithium ions. For example, the separator may be made of, but is not limited to, a polyethylene film, a polypropylene film, a polyethylene-polypropylene film, or the like.

The separator 125 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 125 may include a porous substrate and a coating layer including an organic material, an inorganic material, or a combination thereof on one or both surfaces (e.g., both main surfaces) of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

The separator 215 may be longer in a height direction of the electrode assembly 210 than the first electrode 212 and the second electrode 214. For example, a length of the separator 215 may be greater than the lengths of the first electrode 212 and the second electrode 214 in relation to the direction of the winding axis C of the electrode assembly 210. An upper end of the separator 215 may be disposed above the upper end of the first electrode 212 and the upper end of the second electrode 214, and a lower end of the separator 215 may be disposed under the lower end of the first electrode 212 and the lower end of the second electrode 214.

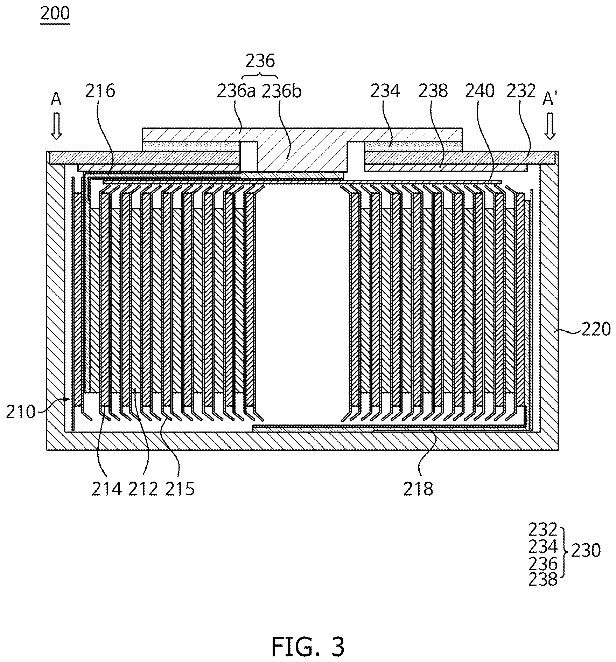

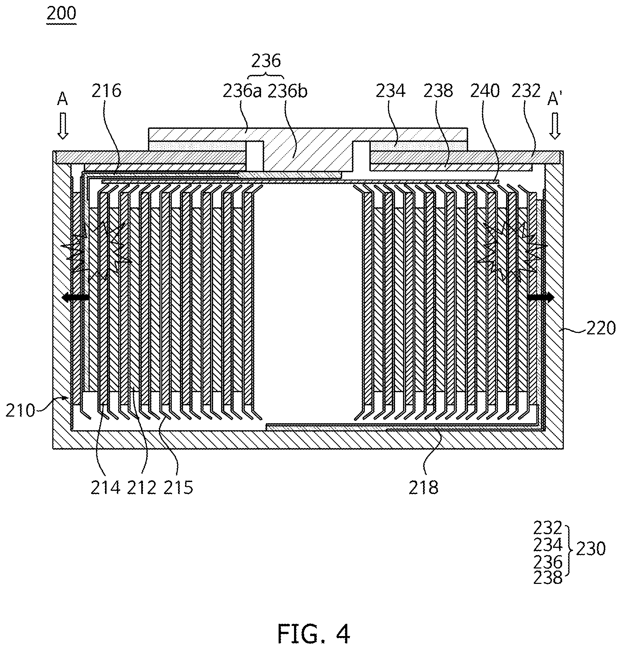

FIG. 3 is a cross-sectional view illustrating an example of a secondary battery according to a comparative example of the present disclosure, and FIG. 4 is a cross-sectional view illustrating an example of a secondary battery with an expanded electrode assembly according to a comparative example of the present disclosure.

Referring to FIGS. 3 and 4, a secondary battery 200 may include an electrode assembly 210, a case 220, a cap assembly 230, and an insulating washer 240.

The cap assembly 230 may include a cap plate 232, an insulating layer 234, a terminal plate 236, and an insulating member 238. In one or more embodiments, the cap plate 232 may cover an opening of the case 220. The cap plate 232 may be coupled with a side surface of the case 220 corresponding to a side surface of the opening.

The electrode assembly 210 may include a first electrode 212, a second electrode 214, and a separator 215, and may further include a first electrode tab 216 connected to the first electrode 212 and a second electrode tab 218 connected to the second electrode 214. The first electrode tab 216 may be connected to the cap assembly 230, and the second electrode tab 218 may be connected to a bottom portion of the case 220.

The electrode assembly 210 may be formed by winding the separator 215 interposed between the first electrode 212 and the second electrode 214. The electrode assembly 210 may be wound to form a core, and may include a through-hole in the core. Sizes of the first electrode 212 and the second electrode 214 may be different from each other. When the negative electrode is smaller, the separator may be damaged and a short circuit may occur as lithium ions are precipitated from a portion of the positive electrode that does not face the negative electrode and grow during charge. Accordingly, the second electrode 214 may be larger than the first electrode 212. For example, a length of the second electrode 214 may be greater than a length of the first electrode 212 in relation to the direction of the winding axis of the electrode assembly 210.

FIG. 3 is an example schematically illustrating a wound structure of the wound electrode assembly 210, but the number and size structure of electrode plates may vary. The first electrode 212 or the second electrode 214 may be present at an outmost edge of the electrode assembly 210. The first electrode tab 216 and the second electrode tab 218 of the electrode assembly 210 may be formed on different side surfaces of the electrode assembly 210.

Referring to FIG. 3, the electrode assembly 210 may not come into contact with the side wall portion of the case 220 before expansion.

However, due to a mixture of the active material, the binder, and the conductive material, a volume of the electrode assembly 210 may be changed during secondary battery charge and discharge. As illustrated in FIG. 4, after the electrode assembly 210 is expanded, the electrode assembly may come into contact with the side wall portion of the case 220 to apply a pressure. As a result, the side wall portion of the case 220 may exert a pressure on the electrode assembly 210 in reaction. Accordingly, cracks may occur in the first electrode 212 and the second electrode 214 due to the pressure from the side wall portion of the case 220.

In the present disclosure, a case where the electrode assembly 210 comes into contact with the case 220 includes both a case where the electrode assembly 210 comes into contact with the case 220 with another member such as an insulating member interposed therebetween and a case where the electrode assembly 210 comes into direct contact with the case 220.

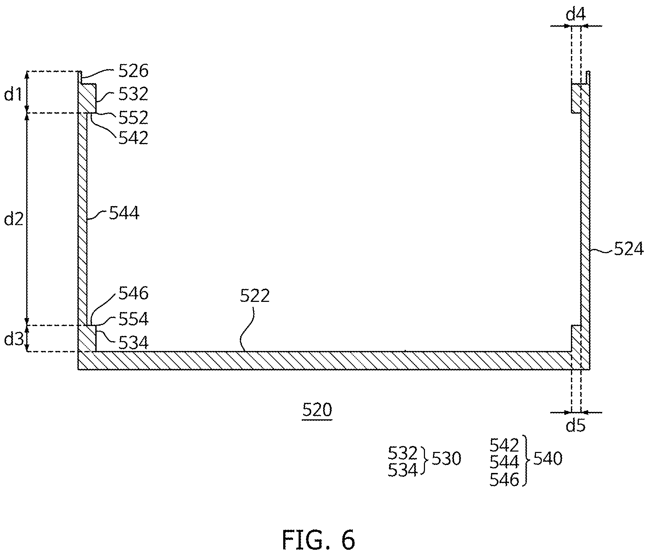

FIG. 5 is a diagram illustrating an example of a shape of a groove region according to one or more embodiments of the present disclosure, and FIG. 6 is a cross-sectional view illustrating an example of a case in which the groove region is formed according to one or more embodiments of the present disclosure.

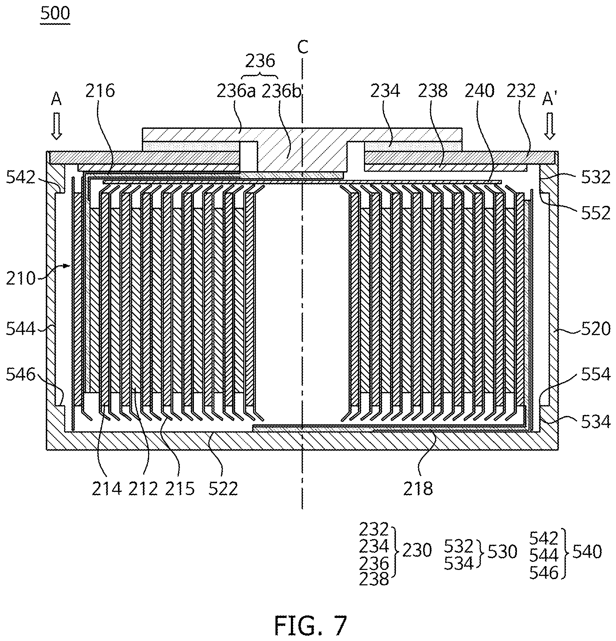

Referring to FIGS. 5 and 6, a secondary battery 500 (see FIG. 7) may include a case 520, a cap assembly 510, and an electrode assembly 210 (see FIG. 2). The secondary battery 500 may be a coin or button secondary battery. For example, the secondary battery 500 may have a cylindrical shape. The case 520 may accommodate the electrode assembly 210 (see FIG. 2) and an electrolyte, and may form an outer shape of the secondary battery together with the cap assembly 510.

According to one or more embodiments, the case 520 may include a bottom portion 522, a side wall portion 524 connected to the bottom portion 522, and an opening portion 526 facing the bottom portion 522. The case 520 may include a groove region 540 formed on an inner peripheral surface of the side wall portion 524.

According to one or more embodiments, an inner peripheral surface 530 may include a first inner peripheral surface 532 positioned adjacent to the opening portion 526 and a second inner peripheral surface 534 positioned adjacent to the bottom portion 522. The groove region 540 may include a first surface 542 connected to the first inner peripheral surface 532, a third surface 546 connected to the second inner peripheral surface 534, and a second surface 544 connected to the first surface 542 and the third surface 546.

According to one or more embodiments, the first inner peripheral surface 532 and the second inner peripheral surface 534 may be substantially parallel to each other. In one or more embodiments, the second surface 544 may be substantially parallel to the first inner peripheral surface 532 and the second inner peripheral surface 534. However, a shape of the second surface 544 may include a surface inclined at a predetermined angle with respect to the first inner peripheral surface 532 and/or the second inner peripheral surface 534.

According to one or more embodiments, the first surface 542 may be substantially perpendicular to the first inner peripheral surface 532, and the third surface 546 may be substantially perpendicular to the second inner peripheral surface 534. As a result, the first surface 542 and the third surface 546 may be substantially parallel to each other. The first surface 542 and the third surface 546 may be substantially perpendicular to the second surface 544.

According to one or more embodiments, a boundary line 552 between the first inner peripheral surface 532 and the first surface 542 may be formed to be separated from a boundary line 554 between the second inner peripheral surface 534 and the third surface 546 by a predetermined distance d2. For example, the predetermined distance d2 may be 2 mm to 4 mm in relation to a direction of a winding axis C (see FIG. 7) of the electrode assembly 210. As a result, a length of the groove region 540 may correspond to a length of the positive electrode and/or negative electrode in relation to the direction of the winding axis C (see FIG. 7) of the electrode assembly 210.

According to one or more embodiments, the boundary line 552 between the first inner peripheral surface 532 and the first surface 542 may be positioned to be separated from an end of the opening portion 526 by a predetermined distance d1 of 0.4 mm to 0.6 mm. As a result, the boundary line 552 between the first inner peripheral surface 532 and the first surface 542 may be formed to be positioned above an upper end of a positive electrode and to be at the same level as an upper end of a negative electrode. The boundary line 552 between the first inner peripheral surface 532 and the first surface 542 may be formed to be positioned above the upper end of the positive electrode and the upper end of the negative electrode.

According to one or more embodiments, the boundary line 554 between the second inner peripheral surface 534 and the third surface 546 may be positioned to be separated from the bottom portion 522 by a predetermined distance d3 of 0.1 mm to 0.3 mm. As a result, the boundary line 554 between the second inner peripheral surface 534 and the third surface 546 may be formed to be positioned under a lower end of the positive electrode and to be at the same level as a lower end of the negative electrode. The boundary line 554 between the second inner peripheral surface 534 and the third surface 546 may be formed to be positioned under the lower end of the positive electrode and the lower end of the negative electrode.

According to one or more embodiments, a distance d4 by which the second surface 544 is separated from the boundary line 552 between the first inner peripheral surface 532 and the first surface 542 may be equal to a distance d5 by which the second surface 544 is separated from the boundary line 554 between the second inner peripheral surface 534 and the third surface 546.

According to one or more embodiments, the second surface 544 may be positioned to be separated from the boundary line 552 between the first inner peripheral surface 532 and the first surface 542 by a predetermined distance d4 of 0.01 mm to 0.07 mm. As a result, a pressure exerted by the side wall portion 524 of the case 520 when the electrode assembly is expanded can be reduced. However, a shape and a size of the groove region 540 may vary.

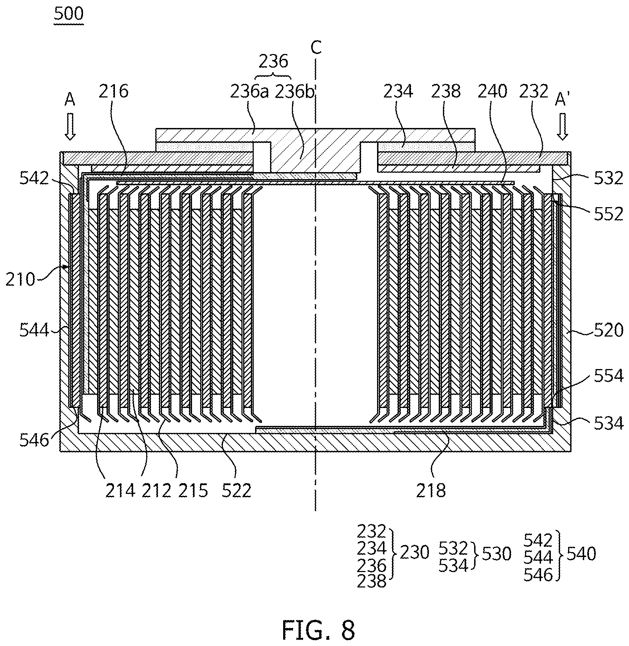

FIG. 7 is a cross-sectional view illustrating an example of a secondary battery with a groove region according to one or more embodiments of the present disclosure, and FIG. 8 is a cross-sectional view illustrating an example of a secondary battery with an expanded electrode assembly according to one or more embodiments of the present disclosure.

Referring to FIGS. 7 and 8, a secondary battery 500 may include an electrode assembly 210, a case 520, a cap assembly 230, and an insulating washer 240.

The cap assembly 230 may include a cap plate 232, an insulating layer 234, a terminal plate 236, and an insulating member 238. In one or more embodiments, the cap plate 232 may cover an opening of the case 220. The cap plate 232 may be coupled with a side surface of the case 520 corresponding to a side surface of the opening.

An insertion groove may be formed in the cap plate 232. For example, the insertion groove may be formed at a center of the cap plate 232. A part of the terminal plate 236 (for example, an insertion portion 236b of the terminal plate) may be inserted into the insertion groove, and the terminal plate 236 may be disposed on the cap plate 232. The terminal plate 236 may include a body portion 236a and the insertion portion 236b protruding on the body portion 236a. In one or more embodiments, the insertion portion 236b of the terminal plate 236 may be inserted into the insertion groove of the cap plate 232. The insertion portion 236b of the terminal plate 236 may be electrically connected by coming into contact with the first electrode tab 216. Referring to FIG. 7, the cap assembly 230 including the terminal plate 236 may be coupled with the case 520 such that the insertion portion 236b faces the electrode assembly 210. However, the cap assembly may be coupled with the case such that the insertion portion of the terminal plate faces a direction opposite to the electrode assembly (for example, a direction of an upper surface of the battery), but may vary.

The insulating layer 234 may be disposed between the terminal plate 236 and the cap plate 232. The insulating layer 234 has adhesive strength, and may couple the terminal plate 236 and the cap plate 232. The insulating layer 234 may be made of an insulating material and may electrically insulate the terminal plate 236 and the cap plate 232.

The insulating member 238 may be disposed on a lower surface of the cap plate 232. In one or more embodiments, an upper surface of the cap plate 232 may face the body portion 236a of the terminal plate 236, and the lower surface of the cap plate 232 may face the electrode assembly. The insulating member 238 may be made of an insulating material, and may electrically insulate the cap plate 232 and the electrode assembly 210 or may electrically insulate the cap plate 232 and the first electrode tab 216.

The electrode assembly 210 may include a finishing tape that wraps at least a part of a circumference of the outmost edge of the electrode assembly 210. In one or more embodiments, the finishing tape may fix the wound electrode assembly 210. For example, in the electrode assembly 210, the winding of the first electrode, the second electrode, and the separator may be maintained without being unwound by the finishing tape. For example, the finishing tape may have adhesive strength, and may be coupled with at least a part of the circumference of the outmost edge of the electrode assembly 210.

The electrode assembly 210 may further include a first electrode tab 216 connected to the first electrode 212 and a second electrode tab 218 connected to the second electrode 214. The first electrode tab 216 may be connected to the cap assembly 230, and the second electrode tab 218 may be connected to a bottom portion 522 of the case 520.

The first electrode tab 216 may be bent under the terminal plate 236 in the case 520 in which the electrode assembly 210 is accommodated and with which the cap assembly 230 is coupled. A short circuit of the bent first electrode tab 216 with the electrode assembly 210 can be prevented by the insulating washer 240. For example, the insulating washer 240 may be disposed between the electrode assembly 210 and the terminal plate 236. For example, the insulating washer 240 may be disposed between the first electrode tab 216 and the electrode assembly 210 positioned under the terminal plate 236. The insulating washer 240 may contain an insulating material. The insulating washer 240 may separate the first electrode tab 216 and the electrode assembly 210. The insulating washer 240 may electrically insulate the first electrode tab 216 and the electrode assembly 210.

Each of the first electrode tab 216 and the second electrode tab 218 may be covered with a cover tape. The cover tape may contain an insulating material. In one or more embodiments, the insulating material may have electrical insulating properties, and thus, a current can be prevented from passing through. As a result, a short circuit that may occur between the first electrode tab 216, the second electrode tab 218, and a conductive component can be prevented.

The electrode assembly 210 may be accommodated together with the electrolyte inside the case 520 in a state of being wound into a cylindrical shape. The electrolyte may be an organic liquid containing a salt injected to allow lithium ions to move between a positive electrode plate and a negative electrode plate. The electrolyte may contain, but is not limited to, a non-aqueous organic electrolyte which is a mixture of a lithium salt such as LiPF₆, LiPF₄, or LiClO₄ and a high-purity organic solvent.

According to one or more embodiments, the case 520 may include the groove region 540 formed on the inner peripheral surface of the side wall portion. A length of the groove region 540 may be set in relation to a direction of a winding axis C of the electrode assembly 210 in consideration of a length of the first electrode 212 and/or the second electrode 214. For example, the first electrode 212 may be a positive electrode and the second electrode 214 may be a negative electrode. Because the negative electrode contains an anode active material such as silicon, the negative electrode may be expanded more than the positive electrode during secondary battery charge and discharge. Accordingly, the length of the groove region 540 may be set to correspond to the length of the second electrode 214 that is the negative electrode.

According to one or more embodiments, the boundary line 552 between the first inner peripheral surface 532 and the first surface 542 may be formed to be separated from the boundary line 554 between the second inner peripheral surface 534 and the third surface 546 by a predetermined distance. The predetermined distance may correspond to the length of the second electrode 214 in relation to the direction of the winding axis C of the electrode assembly 210. For example, the predetermined distance may be equal to the length of the second electrode 214 in relation to the direction of the winding axis C of the electrode assembly 210. As a result, the pressure applied by the side wall portion of the case 520 when the electrode assembly 210 is expanded is reduced, and thus, cracks in the first electrode 212 and the second electrode 214 can be prevented in advance. However, the predetermined distance may be greater than or less than the length of the second electrode 214.

According to one or more embodiments, the boundary line 552 between the first inner peripheral surface 532 and the first surface 542 may be positioned to correspond to the upper end of the second electrode 214, and the boundary line 554 between the second inner peripheral surface 534 and the third surface 546 may be positioned to correspond to the lower end of the second electrode 214. For example, the boundary line 552 between the first inner peripheral surface 532 and the first surface 542 may be formed to be at the same level as the upper end of the wound second electrode 214 or may be formed to be positioned above the upper end of the wound second electrode 214. The boundary line 554 between the second inner peripheral surface 534 and the third surface 546 may be formed to be at the same as the lower end of the wound second electrode 214 or may be formed to be positioned under the lower end of the wound second electrode 214. Due to these structural features, the electrode assembly 210 may be fixed by the boundary line 552 between the first inner peripheral surface 532 and the first surface 542 and the boundary line 554 between the second inner peripheral surface 534 and the third surface 546 when the electrode assembly is expanded. As a result, because the electrode assembly 210 is fixed by the groove region 540 when the secondary battery 500 moves, the movement of the electrode assembly 210 within the secondary battery 500 can be reduced.

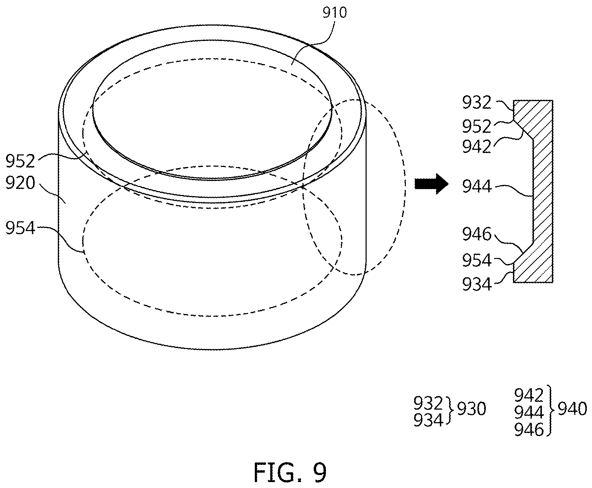

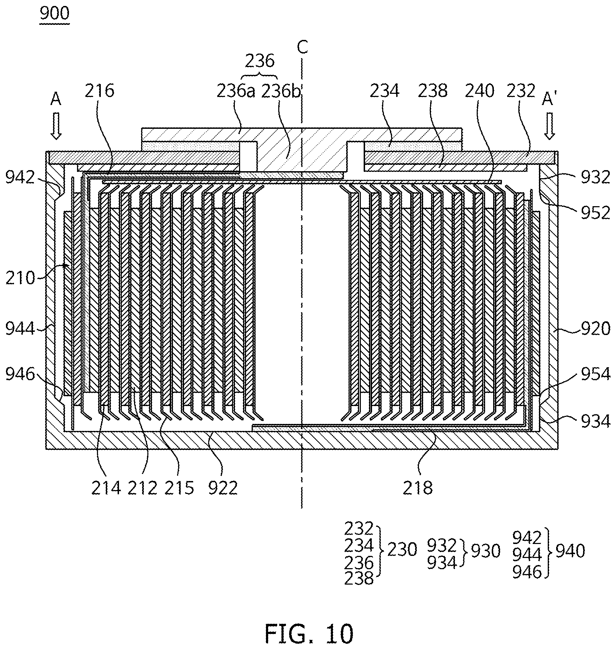

FIG. 9 is a diagram illustrating an example of a shape of a groove region according to one or more embodiments of the present disclosure, and FIG. 10 is a cross-sectional view illustrating an example of a secondary battery with a groove region according to one or more embodiments of the present disclosure. The description of the configurations described in FIGS. 5 to 8 among configurations of FIGS. 9 and 10 is omitted.

According to one or more embodiments, a first surface 942 may include an inclined surface, and a third surface 946 may include an inclined surface. As illustrated in FIGS. 9 and 10, a boundary line 952 between a first inner peripheral surface 932 and the first surface 942 may be formed to be positioned above a boundary line between the first surface 942 and a second surface 944. A boundary line 954 between a second inner peripheral surface 934 and the third surface 946 may be formed to be positioned under a boundary line between the second surface 944 and the third surface 946. However, unlike the case illustrated in FIGS. 9 and 10, the boundary line 952 between the first inner peripheral surface 932 and the first surface 942 may be formed to be positioned under the boundary line between the first surface 942 and the second surface 944. The boundary line 954 between the second inner peripheral surface 934 and the third surface 946 may be formed to be positioned above the boundary line between the second surface 944 and the third surface 946.

As illustrated in FIG. 10, the boundary line between the first surface 942 and the second surface 944 may be formed to be positioned above the upper end of the wound first electrode 212, and the boundary line between the second surface 944 and the third surface 946 may be formed to be positioned under the lower end of the wound first electrode 212. Unlike the case illustrated in FIG. 10, the boundary line between the first surface 942 and the second surface 944 may be formed to be positioned under the upper end of the wound first electrode 212, and the boundary line between the second surface 944 and the third surface 946 may be formed to be positioned above the lower end of the wound first electrode 212.

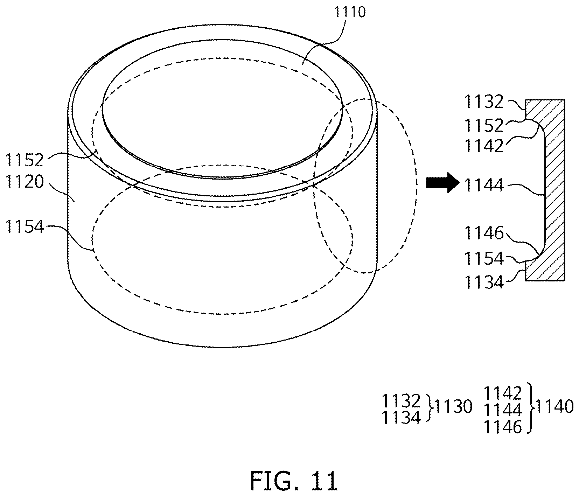

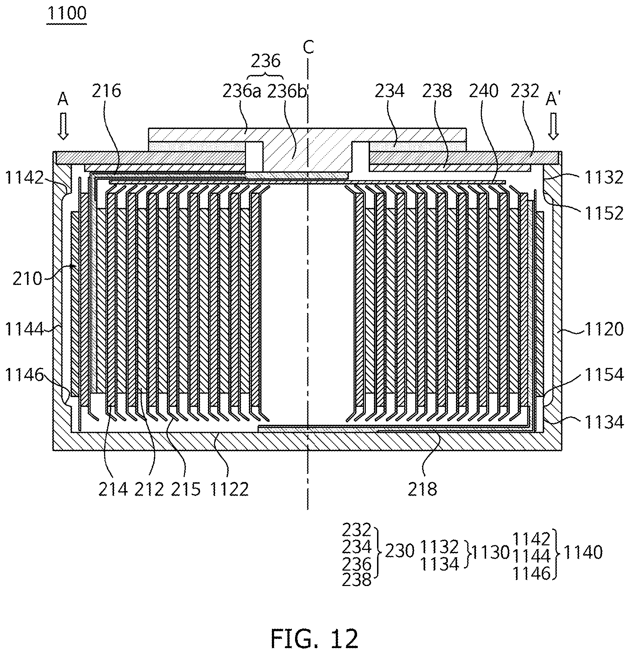

FIG. 11 is a diagram illustrating an example of a shape of a groove region according to one or more embodiments of the present disclosure, and FIG. 12 is a cross-sectional view illustrating an example of a secondary battery with a groove region according to one or more embodiments of the present disclosure. The description of the configurations described in FIGS. 5 to 8 among configurations of FIGS. 11 and 12 is omitted.

According to one or more embodiments, a first surface 1142 may include a curved surface, and a third surface 1146 may include a curved surface. As illustrated in FIGS. 11 and 12, a boundary line 1152 between a first inner peripheral surface 1132 and a first surface 1142 may be formed to be positioned above a boundary line between the first surface 1142 and a second surface 1144. A boundary line 1154 between a second inner peripheral surface 1134 and a third surface 1146 may be formed to be positioned under a boundary line between the second surface 1144 and the third surface 1146. However, a shape of a groove region 1140 is not limited thereto, and unlike the case illustrated in FIGS. 11 and 12, the boundary line 1152 between the first inner peripheral surface 1132 and the first surface 1142 may be formed to be positioned under the boundary line between the first surface 1142 and the second surface 1144. The boundary line 1154 between the second inner peripheral surface 1134 and the third surface 1146 may be formed to be positioned above the boundary line between the second surface 1144 and the third surface 1146.

As illustrated in FIG. 12, the boundary line between the first surface 1142 and the second surface 1144 may be formed to be positioned above the upper end of the wound first electrode 212, and the boundary line between the second surface 1144 and the third surface 1146 may be formed to be positioned under the lower end of the wound first electrode 212. Unlike the case illustrated in FIG. 12, the boundary line between the first surface 1142 and the second surface 1144 may be formed to be positioned under the upper end of the wound first electrode 212, and the boundary line between the second surface 1144 and the third surface 1146 may be formed to be positioned above the lower end of the wound first electrode 212.

A positive electrode and a negative electrode may include a mixture such as an active material, a binder, and a conductive material. A volume of an electrode assembly may be changed by chemicals forming the positive electrode and the negative electrode during charge and discharge. The chemicals forming the positive electrode and the negative electrode are expanded, and thus, the electrode assembly may come into contact with a case accommodating the electrode assembly. At this time, the case may apply a pressure to the electrode assembly, and thus, the positive electrode and the negative electrode of the electrode assembly may be damaged.

According to one or more embodiments of the present disclosure, the secondary battery can be provided to enhance the safety of the secondary battery.

According to one or more embodiments of the present disclosure, the secondary battery can be provided to improve performance and safety of the secondary battery by reducing the pressure applied to the electrode assembly in the secondary battery.

According to one or more embodiments of the present disclosure, when the electrode assembly is expanded due to the secondary battery charge and discharge, the pressure applied to the electrode assembly can be reduced by securing a free space through the groove region of the case, and thus, damage to the electrode can be prevented in advance.

According to one or more embodiments of the present disclosure, when the electrode assembly is expanded due to the secondary battery charge and discharge, even though the secondary battery is moved, the groove region of the case can fix the electrode assembly, and thus, the movement of the electrode assembly can be reduced within the secondary battery.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### Explanation of reference symbols

100, 200, 500, 900, 1100: secondary battery
110, 230, 510, 910, 1110: cap assembly
120, 220, 520, 920, 1120: case
210: electrode assembly
212: first electrode
214: second electrode
215: separator
216: first electrode tab
218: second electrode tab
522: bottom portion
524: side wall portion
526: opening portion
530, 930, 1130: inner peripheral surface
532, 932, 1132: first inner peripheral surface
534, 934, 1134: second inner peripheral surface
540, 940, 1140: groove region
542, 942, 1142: first surface
544, 944, 1144: second surface
546, 946, 1146: third surface
552, 952, 1152: boundary line between first inner peripheral surface and first surface
554, 954, 1154: boundary line between second inner peripheral surface and third surface

## Claims

1. A secondary battery, comprising:
an electrode assembly comprising a first electrode, a second electrode, and a separator therebetween;
a case comprising a bottom portion, a side wall portion connected to the bottom portion, and an opening portion facing the bottom portion, the case accommodating the electrode assembly; and
a cap assembly coupled to one end of the side wall portion of the case to seal the opening portion,
wherein the case comprises a groove region on an inner peripheral surface of the side wall portion.

2. The secondary battery as claimed in claim 1, wherein:
the first electrode is a positive electrode, and
the second electrode is a negative electrode.

3. The secondary battery as claimed in claim 1 or 2, wherein a length of the second electrode is greater than a length of the first electrode in relation to a winding axis direction of the electrode assembly.

4. The secondary battery as claimed in claim 1, 2 or 3, wherein the secondary battery comprises a coin cell or a button cell.

5. The secondary battery as claimed in any preceding claim, wherein a material of the case comprises stainless steel.

6. The secondary battery as claimed in any preceding claim, wherein:
the electrode assembly further comprises:
a first electrode tab connected to the first electrode, and
a second electrode tab connected to the second electrode.

7. The secondary battery as claimed in claim 6, wherein the first electrode tab is connected to the cap assembly.

8. The secondary battery as claimed in claim 6 or 7, wherein the second electrode tab is connected to the bottom portion of the case.

9. The secondary battery as claimed in any preceding claim, wherein:
the inner peripheral surface comprises:
a first inner peripheral surface positioned adjacent to the opening portion, and
a second inner peripheral surface positioned adjacent to the bottom portion, and
the groove region comprises:
a first surface connected to the first inner peripheral surface,
a third surface connected to the second inner peripheral surface, and
a second surface connected to the first surface and the third surface.

10. The secondary battery as claimed in claim 9, wherein:
the third surface is substantially perpendicular to the second inner peripheral surface.

11. The secondary battery as claimed in claim 9, wherein:
the first surface comprises an inclined surface, and
the third surface comprises an inclined surface.

12. The secondary battery as claimed in claim 9, wherein:
the first surface comprises a curved surface, and
the third surface comprises a curved surface.

13. The secondary battery as claimed in any one of claims 9 to 12, wherein:
a first boundary line between the first inner peripheral surface and the first surface corresponds to an upper end of the second electrode, and
a second boundary line between the second inner peripheral surface and the third surface corresponds to a lower end of the second electrode.

14. The secondary battery as claimed in any one of claims 9 to 13, wherein a boundary line between the first inner peripheral surface and the first surface is separated from an end of the opening portion by a predetermined distance of 0.4 mm to 0.6 mm.

15. The secondary battery as claimed in any one of claim 9 to 14, wherein a boundary line between the second inner peripheral surface and the third surface is positioned to be separated from the bottom portion by a predetermined distance of 0.1 mm to 0.3 mm.

## Amended claims

### Amended claims in accordance with Rule 137(2) EPC.

1. A secondary battery (100), comprising:
an electrode assembly (210) comprising a first electrode (212), a second electrode (214), and a separator (215) therebetween;
a case (120) comprising a bottom portion, a side wall portion connected to the bottom portion, and an opening portion facing the bottom portion, the case (120) accommodating the electrode assembly (210); and
a cap assembly (230) coupled to one end of the side wall portion of the case (120) to seal the opening portion,
wherein the case (120) comprises a groove region on an inner peripheral surface (530) of the side wall portion,
wherein:
the inner peripheral surface (530) comprises:
a first inner peripheral surface (532) positioned adjacent to the opening portion, and
a second inner peripheral surface (534) positioned adjacent to the bottom portion,
the groove region comprises:
a first surface (542) connected to the first inner peripheral surface (532),
a third surface (546) connected to the second inner peripheral surface (534),
a second surface (544) connected to the first surface (542) and the third surface (546),
a first boundary line between the first inner peripheral surface (532) and the first surface (542) corresponds to an upper end of the second electrode (214), and
a second boundary line between the second inner peripheral surface (534) and the third surface (546) corresponds to a lower end of the second electrode (214).

2. The secondary battery (100) as claimed in claim 1, wherein:
the first electrode (212) is a positive electrode, and
the second electrode (214) is a negative electrode.

3. The secondary battery (100) as claimed in claim 1 or 2, wherein a length of the second electrode (214) is greater than a length of the first electrode (212) in relation to a winding axis direction of the electrode assembly (210).

4. The secondary battery (100) as claimed in claim 1, 2 or 3, wherein the secondary battery (100) comprises a coin cell or a button cell.

5. The secondary battery (100) as claimed in any preceding claim, wherein a material of the case (120) comprises stainless steel.

6. The secondary battery (100) as claimed in any preceding claim, wherein:
the electrode assembly (210) further comprises:
a first electrode tab (216) connected to the first electrode (212), and
a second electrode tab (218) connected to the second electrode (214).

7. The secondary battery (100) as claimed in claim 6, wherein the first electrode tab (216) is connected to the cap assembly (230).

8. The secondary battery (100) as claimed in claim 6 or 7, wherein the second electrode tab (218) is connected to the bottom portion of the case (120).

9. The secondary battery (100) as claimed in any preceding claim, wherein:
the third surface (546) is substantially perpendicular to the second inner peripheral surface (534).

10. The secondary battery (100) as claimed in any preceding claim, wherein:
the first surface (542) comprises an inclined surface, and
the third surface (546) comprises an inclined surface.

11. The secondary battery (100) as claimed in any preceding claim, wherein:
the first surface (542) comprises a curved surface, and
the third surface (546) comprises a curved surface.

12. The secondary battery (100) as claimed in any preceding claim, wherein a boundary line between the first inner peripheral surface (532) and the first surface (542) is separated from an end of the opening portion by a predetermined distance of 0.4 mm to 0.6 mm.

13. The secondary battery (100) as claimed in any preceding claim, wherein a boundary line between the second inner peripheral surface (534) and the third surface (546) is positioned to be separated from the bottom portion by a predetermined distance of 0.1 mm to 0.3 mm.
